# EUROPEAN PATENT APPLICATION

(11) **EP 0 955 270 A1**
(43) Date of publication of application: **10.11.1999**
(21) Application number: 98830271.7
(22) Date of filing: 06.05.1998
(51) Int. Cl.: C02F 9/00, C02F 1/70

(54) **A method of disposing of effluents containing formaldehyde or formaldehyde precursors such as hexamine**

(71) Applicant: Cambria, Flavio, 20121 Milano (IT)
(72) Inventor: Cambria, Flavio, 20121 Milano (IT)
(74) Representative: Ferreccio, Rinaldo

(57) **Abstract**

In a method of treating effluents containing formaldehyde and/or precursors thereof, a compound containing hexavalent chromium, particularly sodium dichromate, is added to the effluents in an acid environment to give a solution which contains trivalent chromium ions and products of the oxidation of all of the formaldehyde and/or precursors thereof, and which can be used for tanning hides.

## Description

The present invention relates to a method of disposing of effluents containing formaldehydes and/or precursors thereof from industrial plants for the production of formaldehyde, trioxan, hexamine and similar and/or homologous molecules.

The term "precursors" is intended to define compounds which can produce formaldehyde as a result of decomposition.

Effluents of this type are particularly polluting both as an organic load, expressed as the COD value, and owing to the very high COD:BOD ratio. In fact they have considerable bactericidal characteristics and consequently cannot be processed in biological purification plants since they would partially or completely destroy the biomass and the bacterial flora.

It is also difficult to separate the harmful substances by distillation since, because formaldehyde is a gas, it is difficult to capture at ambient temperature. It is also difficult to apply distillation techniques for separating solid substances such as hexamine which decomposes, giving rise to formaldehyde and ammonia, at temperatures only slightly above ambient temperature.

Currently, the most suitable system for disposing of effluents from the above-mentioned processes is incineration. However, treatment of this type is very demanding and, above all, expensive since gaseous derivatives of the type emitted may involve the use of after-burners and/or may require extraction which may lead to further effluents.

The problem upon which the present invention is based is therefore that of providing a method of disposing of effluents containing formaldehyde and/or precursors thereof which prevents the above-mentioned technical problems.

The problem is solved, according to the invention, by a method of treating effluents containing formaldehyde and/or precursors thereof in which a compound containing hexavalent chromium is added to the effluent in an acid environment to give a solution containing trivalent chromium ions and products of the oxidation of all of the formaldehyde and/or precursors thereof.

The oxidation-reduction reaction preferably takes place at temperatures variable from 60 to 140°C and for a period of between 3 minutes and twelve hours; it may be carried out in batches or continuously, at atmospheric pressure, or under raised pressure.

In one particular embodiment of the present invention, the compound containing hexavalent chromium is sodium dichromate and the acid environment is produced by the addition of sulphuric acid.

The method according to the invention may be carried out in "batches" or semi-continuously in a single reactor or even continuously, for example, in a system with reactors in cascade.

The present invention also relates to the use of the solution obtained by the method described above for tanning hides.

The method according to the invention enables the effluents from the above-mentioned production plants to be treated so as to render them completely free of formaldehyde and/or precursors thereof and to render them re-usable in the tanning of hides. The method according to the present invention is therefore doubly advantageous and thus extremely innovative.

The above-mentioned chromium (III) solutions are particularly suitable for the tanning of hides since trivalent chromium is already present in masked form.

In the chromium tanning field, it is in fact known to use agents for masking chromium (III) salts in order to improve the tanning effect. These agents may be added during the tanning operation when simple chromium (III) salts resulting from inorganic reduction are used, or they may be bound to the chromium (III) salt by coordinate chemical bonds; in the second case, the trivalent chromium is defined precisely as "masked", since it is stabilized by its complexing which may be such as to prevent it from being precipitated in hydroxyl form even in a slightly alkaline environment. The masking agents used are generally acids or their salts of which the anions tend to complex easily with chromium, partially replacing coordinated water molecules.

The basic chromium sulphate which is mainly used is that obtained by reduction of the dichromate with gaseous SO₂ or, in the presence of sulphuric acid, with sodium bisulphite or with organic substances such as, for example, sucrose, dextrin and starch and, in particular, with glucose and molasses. In the case of organic reduction, the reducing agents are oxidized to acids forming, *in situ*, the bonds necessary to mask the chromium (III) of the basic sulphate. With both types of oxidation it is also known that there is an improvement in the tanning effect of the chromium (III) salt if some of the sulphuric acid is replaced by organic acids, particularly formic acid.

It is also known that, in many applications, organic agents are preferred to inorganic agents (obtained with dichromate and SO₂) for reducing hexavalent chromium to trivalent chromium, since they permit the production of leathers with optimal feel characteristics such as, for example, excellent firmness, suppleness and fullness of the hide.

The solution produced by the method according to the invention contains chromium (III) salts obtained by reduction of chromium (VI) by means of organic reducing agents which are contained in the effluents to be treated (formaldehyde and/or formaldehyde precursors, as well as alcohols and/or aldehydes) and which, in oxidized form, in turn act as masking agents, thus giving rise to the desired tanning product. In the particular embodiment of the method of the present invention in which sulphuric acid is used, basic masked chromium sulphate is produced.

With the method according to the invention, the hexavalent chromium is normally added in quantities such that all of the organic reducing agents in the effluents to be treated can be oxidized. Should this quantity, and hence the concentration of trivalent chromium resulting therefrom not be sufficient to confer the desired tanning characteristics on the solution produced, further hexavalent chromium and a corresponding quantity of organic reducing agent such as, for example, glucose, sucrose, dextrin and starch, may be added to increase the concentration of trivalent chromium in the solution. The Schörlemmer basicity of the basic chromium (III) sulphate, which expresses the percentage of coordination sites of the chromium occupied by hydroxyl groups, and the value of which is of considerable importance for optimal tanning, can also be corrected and brought to the desired values by the addition of a strong base or acid, respectively, (for example caustic soda or sulphuric acid)

For a better understanding, preferred embodiments of the invention will now be described, by way of non-limiting example.

### EXAMPLES

In the following examples, water discharged from Chang Chun Petrochemical's Miao-Li plant (Taiwan) and having the following characteristics was used:

| | **Sample A** | **Sample B** |
|---|---|---|
| Appearance | clear colourless liquid | clear colourless liquid |
| pH | 7.6 | 10.4 |
| COD (mg/l) | 24,044 | 17,690 |
| CH₃OH (mg/l) | 3,800 | 4,200 |
| HCHO(mg/l) | 8,000 | 10,000 |
| Hexamine (mg/l) | 1,400 | 1,700 |

### Example 1 (Batch reaction)

454ml of sample A was poured into a 2-litre, four-necked glass flask with a thermometer, a vertical stirrer, a condenser, and a dropping funnel, and 345g of 98.25% Na₂Cr₂O₇ in powder form was added with stirring. After the sodium dichromate had completely dissolved, 390g of 98% H₂SO₄ was added at a temperature of 20°C over 30 min. to control exothermy. As soon as the first drops of sulphuric acid had been added, the mixture immediately started to react, changing from orange-red to dark brown, and, in the meantime, the temperature stabilized at about 85°C.

Upon completion of the addition of sulphuric acid, the mixture was reacted for a further three hours at the boiling point of 103°C. To complete the reduction of the hexavalent chromium to trivalent chromium, the solution was cooled to 80°C and 121g of 50% molasses was added. This addition was carried out gradually over 90 min. to prevent carbonisation of the organic substances. The mixture thus obtained was then reacted for a further two hours until the hexavalent chromium had completely disappeared.

The basic chromium sulphate solution obtained had the following chemico-physical characteristics:
- appearance:: clear, green-blue liquid
- Cr₂O₃ content:: 14.2% by weight
- Schörlemmer basicity:: 49.86%
- filter after washing:: colourless, absence of carbon residues.

This solution was used for tanning pickled sides of bullock hides, producing full hides with a fine grain and light green-blue colouration. The shrinkage temperature was greater than 90°C.

### Example 2 (batch reaction)

220ml of sample A and 660ml of sample B were poured into a 1-litre, four-necked, glass flask with a thermometer, a vertical stirrer, a condenser and a dropping funnel, and 55g of 98.25% Na₂Cr₂O₇, in powder form was added with stirring. After the sodium dichromate had completely dissolved, 80g of 98% H₂SO₄ was added at a temperature of 18°C. As soon as the first drops of sulphuric acid had been added, the mixture immediately started to react, changing from orange-red to dark brown and, in the meantime, the temperature stabilized at about 52°C.

Upon completion of the addition of the sulphuric acid, the mixture was reacted for a further four hours at the boiling point of 102°C. To complete the reduction of the hexavalent chromium to trivalent chromium, the solution was cooled to 80°C and 9g of sodium bisulphite was added in a 30% solution by weight. The mixture thus obtained was then reacted for about five minutes until the hexavalent chromium had completely disappeared.

The basic chromium sulphate solution obtained had the following chemico-physical characteristics:
- appearance:: clear, green-blue liquid
- Cr₂O₃ content:: 3.6% by weight
- Schörlemmer basicity:: 28.8%
- filter after washing:: colourless, absence of carbon residues.

8g of caustic soda in a 30% solution by weight was added to the solution thus obtained to give a Schörlemmer basicity of 33.5%.

The resulting solution was concentrated by slow evaporation with continuous and rapid stirring (700 rpm) on a hot plate to give a 13% solution of Cr₂O₃, by weight.

The concentrated solution was used for tanning pickled sides of bullock hides, producing firm hides with a fairly fine grain and light green-blue colouration. The shrinkage temperature was greater than 94°C.

### Example 3 (batch reaction)

590ml of sample A and 200ml of sample B were poured into a 1-litre, four-necked glass flask with a thermometer, a vertical stirrer, a condenser and a dropping funnel and 80g of 98.25% Na₂Cr₂O₇ in powder form was added with stirring. After the sodium dichromate had completely dissolved, 130g of 98% H₂SO₄ was added at a temperature of 18°C. As soon as the first drops of sulphuric acid had been added, the mixture immediately started to react, changing from orange-red to dark brown and, in the meantime, the temperature stabilized at about 71°C.

Upon completion of the addition of the sulphuric acid, the mixture was reacted for a further four hours at the boiling point of 104°C. To complete the reduction of the hexavalent chromium to trivalent chromium, the solution was cooled to 85°C and 43g of sodium bisulphite was added in 30% solution by weight. The mixture thus obtained was then reacted for about ten minutes until the hexavalent chromium had completely disappeared.

The basic chromium sulphate solution obtained had the following chemico-physical characteristics:
- appearance:: clear, green-blue liquid
- Cr₂O₃ content:: 4.55% by weight
- Schörlemmer basicity:: 44%
- filter after washing:: colourless, absence of carbon residues.

13.9g of sodium hydroxide in a 30% solution by weight was added to the solution thus obtained to give a Schörlemmer basicity of 49.8%.

The solution was then used for tanning pickled sides of bullock hides, producing firm hides with a fairly fine grain and light green-blue colouration. The shrinkage temperature was greater than 91°C.

### Example 4 (semi-continuous reaction)

400g of the basic chromium sulphate solution of Example 3 (4.55% by weight of Cr₂O₃, Schörlemmer basicity 49.8%) was poured into a 2-litre, four-necked glass flask with a thermometer, a vertical stirrer and a condenser. The solution was heated to 60°C and two Iwaki electromagnetic metering pumps were used to supply to the flask, respectively, 500g of a first solution composed of 31g of 98.25% sodium dichromate, 47g of 98% H₂SO₄ and 422g of effluent water (107g of sample A + 315g of sample B), and 500ml of a second solution composed of 125 ml of Sample A and 375 ml of Sample B with a flow rate of 0.5 l/h.

The reaction was highly exothermic and a temperature of 103°C was reached after the addition of only 20 ml of both solutions. Once the whole quantity of the two solutions had been metered, 15g of 30% by weight sodium bisulphite was added to the solution obtained, at a temperature of 90°C, to achieve complete reduction of the hexavalent chromium.

The basic chromium sulphate solution obtained had the following chemico-physical characteristics:
- appearance:: clear, green-blue liquid
- Cr₂O₃ content:: 2.56% by weight
- Schörlemmer basicity:: 32.7%
- filter after washing:: colourless, absence of carbon residues.

The resulting solution was concentrated by slow evaporation with continuous and rapid stirring.

The concentrated solution was used for tanning pickled sides of bullock hides, producing firm hides with a fine grain and light green-blue colouration. The shrinkage temperature was greater than 91°C.

### Example 5 (semi-continuous reaction)

200g of the basic chromium sulphate solution of Example 4 (2.56% by weight of Cr₂O₃, Schörlemmer basicity 32.7%) was poured into a 2-litre, four-necked glass flask with a thermometer, a vertical stirrer and a condenser. The solution was heated to 60°C and two Iwaki electromagnetic metering pumps were used to supply to the flask, respectively, 101ml (equal to 178g) of a first solution composed of 93g of 60% sodium dichromate solution [constituted by 57g of 98.25% sodium dichromate and by 36g of effluent water (9g of sample A + 27g of Sample B)] and of 85g of 98% H₂SO₄, by the first pump, and 976ml of a solution constituted by 244ml of sample A and 732ml of sample B, by the second pump, with a flow rate of 0.5 l/h.

The reaction was highly exothermic and a temperature of 105°C was reached after the addition of 15ml of both solutions.

Once the whole quantity of the two solutions had been metered, 15g of 30% by weight sodium bisulphite was added to the solution obtained, at a temperature of 90°C, thus achieving complete reduction of the hexavalent chromium.

The basic chromium sulphate solution obtained had the following chemico-physical characteristics:
- appearance:: clear, green-blue liquid
- Cr₂O₃ content:: 2.68% by weight
- Schörlemmer basicity:: 33.4%
- filter after washing:: colourless, absence of carbon residues.

The resulting solution was concentrated by slow evaporation with continuous and rapid stirring.

The concentrated solution was used to tan pickled sides of bullock hides, producing firm hides with a fine grain and light green-blue colouration.

The shrinkage temperature was greater than 93°C.

## Claims

1. A method of treating effluents containing formaldehyde and/or precursors thereof, in which a compound containing hexavalent chromium is added to the effluents in an acid environment to give a solution containing trivalent chromium ions and products of the oxidation of all of the formaldehyde and/or precursors thereof.

2. A method according to Claim 1, in which the compound containing hexavalent chromium is sodium dichromate.

3. A method according to Claim 1 or Claim 2, in which the acid environment is produced by the addition of sulphuric acid.

4. A method according to any one of the preceding claims, characterized in that it is carried out semi-continuously in a single reactor, or continuously.

5. A method according to any one of the preceding claims, in which the oxidation-reduction reaction takes place at temperatures variable from 60 to 140°C and for a period of between 3 minutes and twelve hours.

6. Use of the solution obtained by the method according to Claims 1 to 4 for tanning hides.
